# EUROPEAN PATENT SPECIFICATION

(11) **EP 1 852 376 B1**
(45) Date of publication and mention of the grant of the patent: **15.07.2009**
(21) Application number: 07107533.7
(22) Date of filing: 04.05.2007
(51) Int. Cl.: B65G 69/00

(54) **Vehicle/Dock alignment and coupling system**
System zum Ausrichten und Ankuppeln eines Fahrzeugs an ein Dock
Système d'alignement de véhicules et système de couplage des véhicules à un quai

(30) Priority: 04.05.2006 US 418361
(43) Date of publication of application: 07.11.2007
(73) Proprietor: Keith Manufacturing Co., Oregon Madras OR 97741 (US)
(72) Inventor: Foster, Raymond Keith, deceased (US); Delamarter, Scott Michael, Tacoma, WA 98406 (US)
(74) Representative: D'Halleweyn, Nele Veerle Trees Gertrudis

(56) References cited:
- US-A1- 2004 062 628

## Description

This invention relates to a loading/unloading dock according to the preamble of claim 1, for coupling a vehicle to a dock for the purpose of facilitating movement of cargo from the vehicle to the dock and from the dock to the vehicle. More particularly, it relates to apparatus for guiding the rear end of a vehicle into proper alignment with a dock, and to apparatus for releasably connecting the vehicle to the dock.

Such an apparatus is disclosed in US 2004/0062628.

This invention utilizes and improves on technology that is disclosed in U.S. Patent No. 6,065,923, granted May 23, 2000, to Raymond Keith Foster, and entitled Vehicle/Dock Alignment System. There is a need for an apparatus built into a dock that moves the rear end of a vehicle to the extent necessary, both vertically and horizontally, for properly aligning the vehicle with the dock, and for then releasably coupling the vehicle to the dock, such apparatus being easily and quickly releasable so that the vehicle can be driven away from the dock. The principal object of the present invention is to fit this need.

The present invention includes providing a loading/unloading dock according to claim 1. The dock comprises a dock end and a vehicle supporting surface leading into the dock end. The dock includes a dock floor elevated above the vehicle supporting surface. The dock floor extends endwise from the dock end, inwardly of the dock, in a direction opposite from the vehicle supporting surface. A pair of laterally spaced apart longitudinal beams are carried by the dock. Each longitudinal beam includes an inboard end portion that is below the dock floor and an outboard end portion that projects endwise outwardly from the dock end over a portion of the vehicle supporting surface. Each longitudinal beam has an inner end and an outer end. A pivotal connection connects the inner end of each longitudinal beam to a support that is below the dock floor. The outer end of each longitudinal beam includes a vehicle-engaging end portion. First and second linear fluid motors are associated with each longitudinal beam. The first linear motor may be incorporated into the longitudinal beam and has a piston component and a cylinder component. One of these components is a part of the inboard end portion of the longitudinal beam and the other is a part of the outboard end portion of the longitudinal beam. The second linear fluid motor has an upper end connected to the inboard end portion of its longitudinal beam and a lower end connected to a support below the inboard end of its longitudinal beam. Each first linear fluid motor is adapted to extend and retract for moving the vehicle-engaging end portion of its longitudinal beam away from and towards the dock end. The second linear fluid motor is adapted to extend and retract for the purpose of swinging its longitudinal beam up and down about the pivotal connection at the inner end of the longitudinal beam.

The invention also includes providing the vehicle-engaging end portion of each longitudinal beam with an outwardly and downwardly sloping upper surface that is adapted to make contact with a lower rear end portion of the vehicle. In the preferred embodiment, the sloping surface has an inner end and an outer end and a hook adjacent the inner end. The hook is adapted to hook onto a rear portion of a vehicle that is backed up to the loading/unloading dock. This allows the first linear motors to be retracted for pulling the rear portion of the vehicle towards the dock end.

Another aspect of the invention is to provide the second linear fluid motors with an expansible chamber into which fluid can be delivered for exerting an upward force on the longitudinal beam for swinging it upwardly about the pivotal connection. Preferably, the fluid is compressible so that a downward force imposed by the vehicle on the outboard end portion of the longitudinal beams will compress the fluid in the expansible chamber and allow the longitudinal beam to swing downwardly in response to the force.

Preferably, the rear end portion of the dock includes bearings on which the longitudinal beams rest when the rear portion of the vehicle is against the dock. The weight of the vehicle imposed on the longitudinal beams is transferred from the longitudinal beams to the bearings and from the bearings to the dock.

Another aspect of the invention is to provide a loading/unloading dock that includes laterally spaced apart side guide members that are connected to the dock and include rear end portions which project rearwardly from the dock end. These side guide members have confronting inner side surfaces which diverge as they extend outwardly from the dock end. These inner side surfaces are adapted to cam a rear portion of a vehicle that is backed into the dock into a particular position relative to the dock.

An extendable/retractable actulator may be positioned adjacent one of the sloping side surfaces, and be adapted to extend sideways against a rear portion of a vehicle being back into the dock end, for exerting a sideways directed force on the rear end portion of the vehicle and pushing it sideways towards the other side surface.

These and other advantages, objects and features of the invention will become apparent from the following description of the illustrated embodiment, and the drawings and the claims, all of which are incorporated herein and are a part of the disclosure of the invention.

### Brief Description of the Several Views of the Drawings

Like reference numerals are used to designate like parts throughout the several views of the drawing, and:
Fig. 1 is a pictorial view of a trailer backed up to a dock, for either receiving or depositing a load, such view being taken from above and looking towards the top, driver's side and the rear end of the trailer, with the interior of the trailer shown for the purpose of depicting cargo that is on a reciprocating slat conveyor that forms the floor of the trailer, such view also showing a complementary slat conveyor on the dock;
Fig. 2 is a top plan view looking towards a rear end portion of the dock, on the left, and a rear end portion of a trailer, on the right, such view showing the trailer in the process of backing up towards the dock, as shown by an arrow;
Fig. 3 is a view like Fig. 2, showing the vehicle backed up into contact with bumpers on the dock, and showing the ends of the conveyor on the dock and in the vehicle spaced apart;
Fig. 4 is a view like Fig. 3, showing upper portions of lifting/holding slats being advanced towards complementary end portions of like members in the trailer;
Fig. 5 is a view like Fig. 5, showing the ends of the upper portions of the lifting/holding slats on the dock moved into engagement with the ends of the upper portions of the lifting/holding slats in the vehicle;
Fig. 6 is a view like Fig. 5, showing the conveying slats on the dock in the process of being moved towards the conveying slats in the vehicle;
Fig. 7 is a view like Fig. 6, showing the conveying slats on the dock moved into engagement with the conveying slats on the vehicle;
Fig. 8 is a vertical sectional view taken through a rear portion of the dock and showing one of two devices for establishing vertical alignment of the conveying slats in the vehicle with the conveying slats on the dock;
Fig. 9 is a view like Fig. 8, showing the vertical alignment devices moving upwardly to align the slats in the vehicle with the slats on the dock;
Fig. 10 is a view like Fig. 9, showing the vertical alignment devices lowered and the vehicle moving away from the dock;
Fig. 11 is a top plan view of the apparatus shown by Figs. 8-10, with some parts in section;
Fig. 12 is an enlarged scale plan view of a laterally extending fluid motor that is mounted on an alignment beam that is on one side of the dock;
Fig. 13 is an enlarged scale plan view of a second alignment beam that is on the opposite side of the dock; and

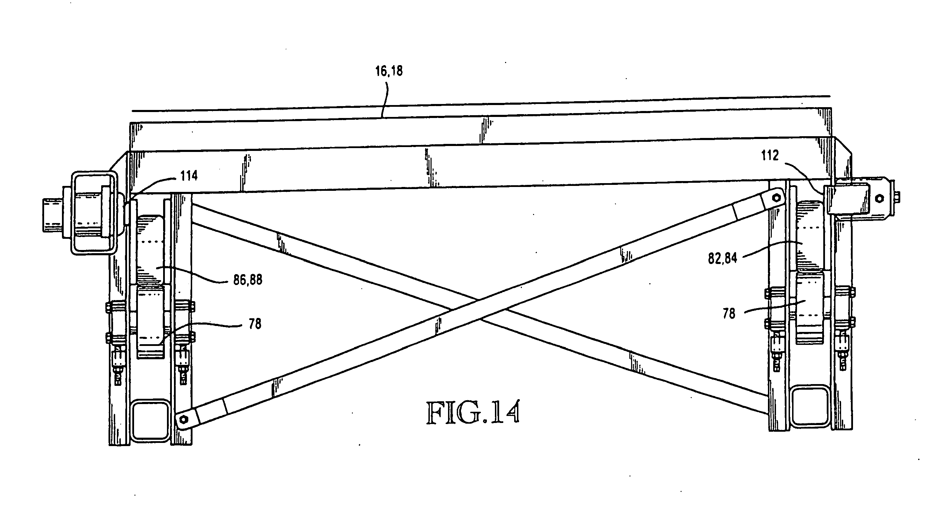

Fig. 14 is a rear elevational view of the alignment apparatus shown by Figs. 8-11.

### Detailed Description of the Illustrated Embodiment

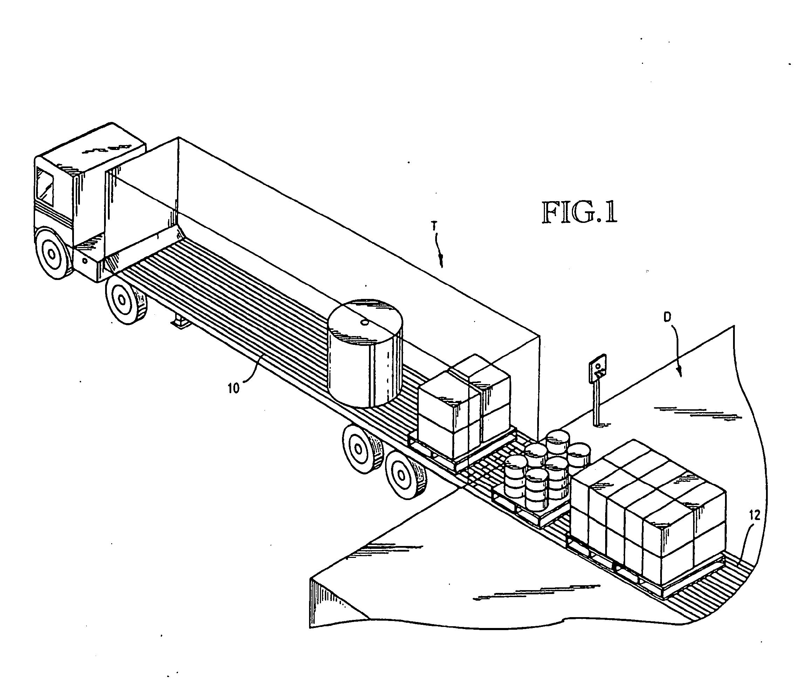

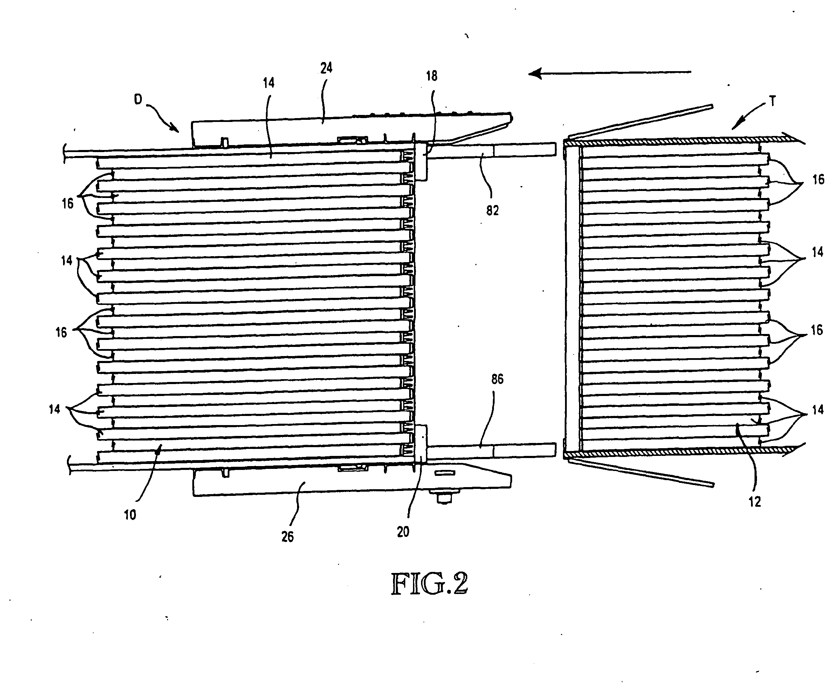

Fig. 1 shows a trailer T backed up against a dock D. The trailer includes a first reciprocating conveyor 10 and the dock includes a second reciprocating slat conveyor 12. The conveyor slats are coupled together and operated as one for moving cargo from the trailer T onto the dock D and from the dock D into the trailer T. See co-pending Application entitled Releasable Connection Between Members ("EK"). Figs. 2 - 7 herein partially show the method and apparatus that are disclosed in Application "EK" The entire contents of Application "EK" are hereby incorporated herein by this specific reference. Figs. 2-7 show fragmentary end views of conveyor 10 on the dock D and conveyor 12 in the trailer T. Both conveyors 10, 12 have laterally spaced apart lifting/holding slats 14 and laterally spaced apart conveying slats 16 between the lifting/holding slats.

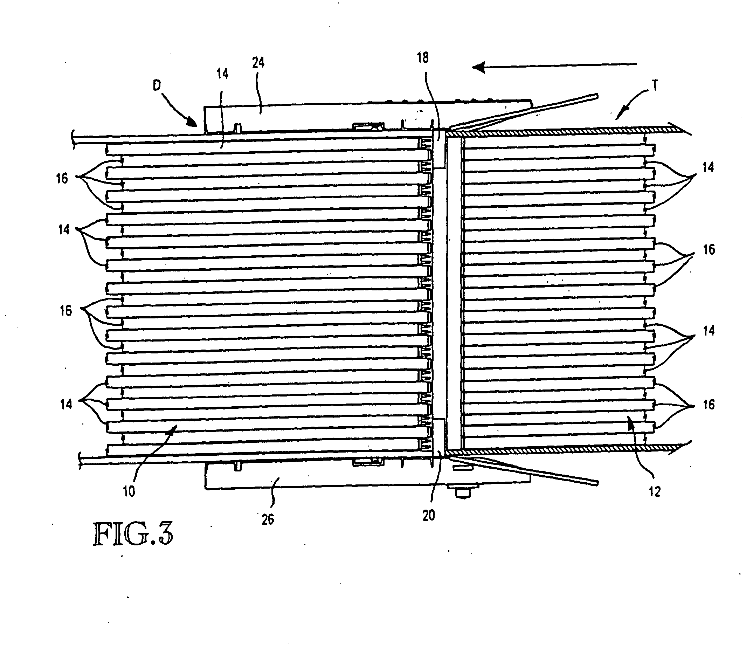

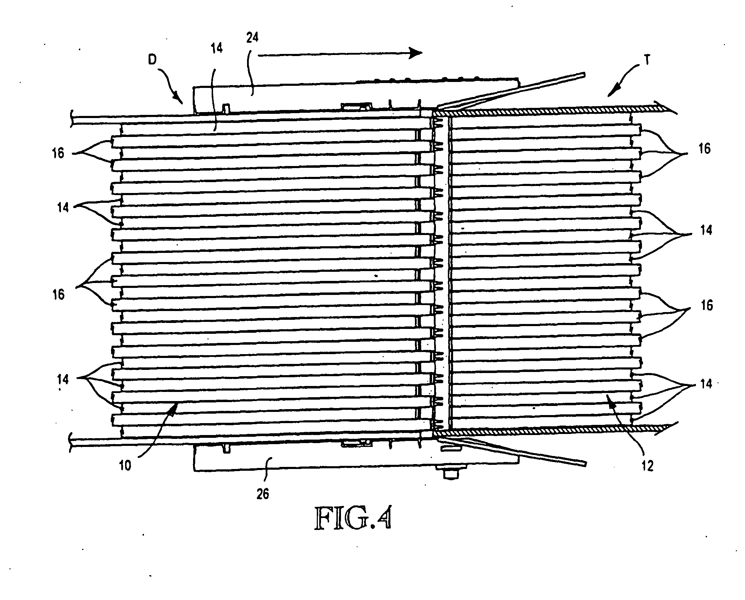

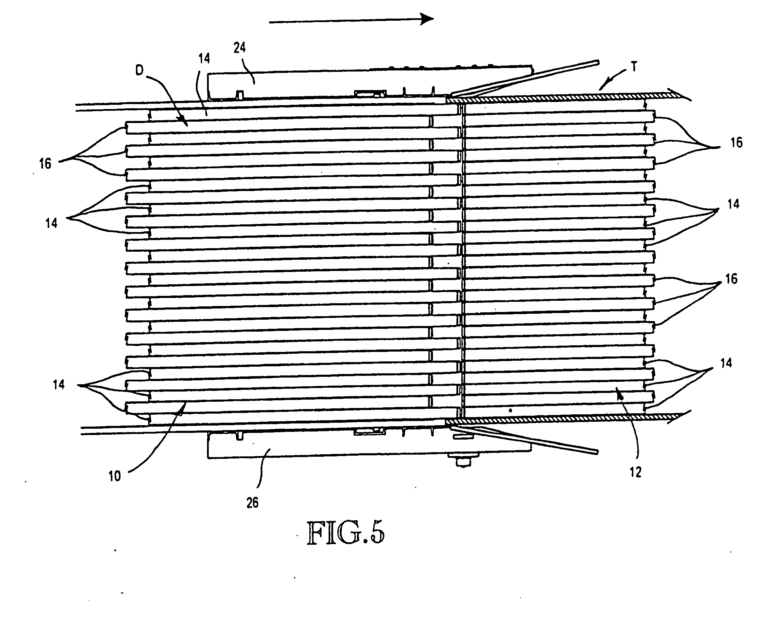

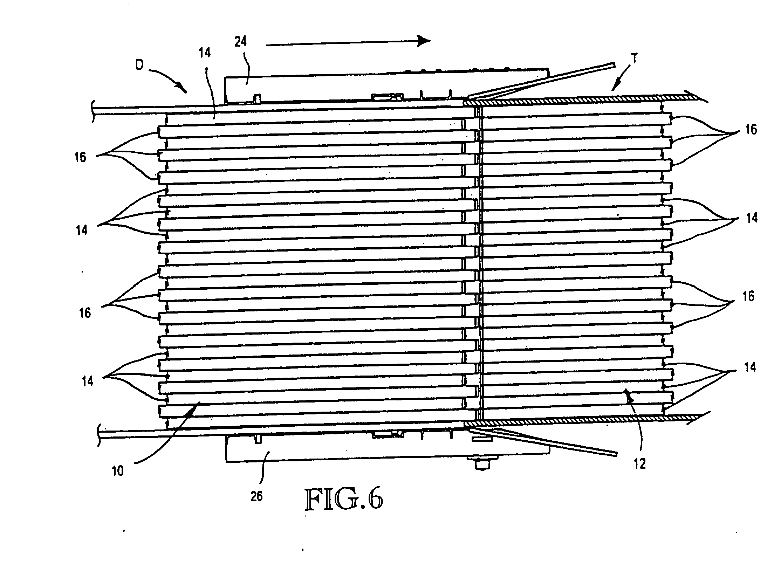

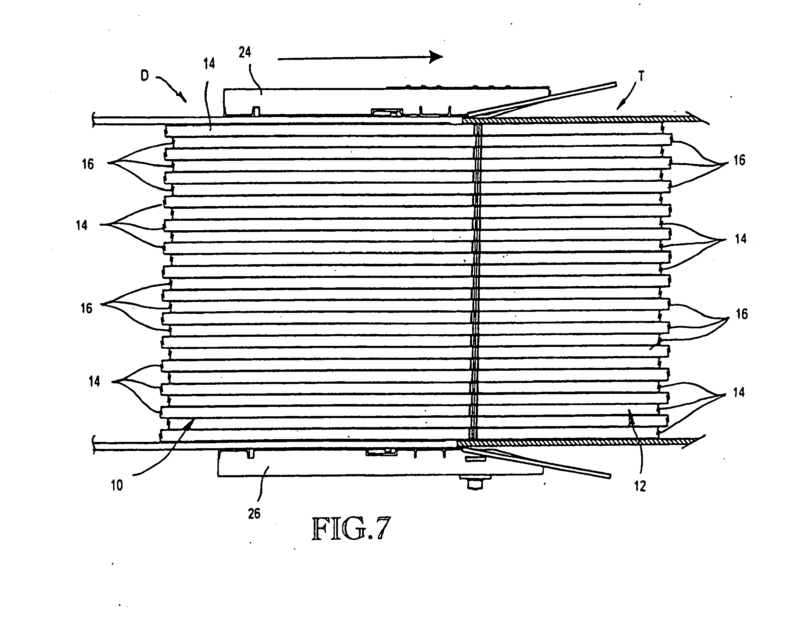

Fig. 2 shows the trailer T in the process of being backed up towards the dock D, with the lifting/holding slats 14 and the conveying slats 16 in the trailer T in substantial alignment with the lifting/holding slats 14 and the conveying slats 16 on the dock D. As disclosed in the aforementioned U.S. Patent No. 6,065,923, a "track" on the vehicle supporting surface may be used for guiding the vehicle wheels to provide close alignment of the conveyor 12 with the conveyor 10. Fig. 3 shows the back end of the trailer T making contact with bumpers 18, 20 on the dock D, below the level of the slats 14, 16. Fig. 4 shows the lifting/holding slats 14 on the dock D being moved towards the lifting/holding slats 16 in the trailer T. Fig. 4 shows that the lifting/holding slats 16 on the dock D have prongs at their rear ends. As disclosed in "EK" these prongs are carried by the rear end portions of upper portions of the slats 16 that are adapted to move up and down. The ends of the movable upper portions of the slats 16 in the trailer T include sockets that receive the prongs. Fig. 5 shows the lifting/holding slats 16 on the dock moved further towards the lifting/holding slats 16 in the trailer T for moving the prongs into the sockets. Fig. 6 shows the conveying slats 18 on the dock D being moved endwise towards the conveying slats 18 in the trailer T. Fig. 7 shows further movement of the conveying slats 18 on the dock D towards the conveying slats 18 in the trailer T. As fully disclosed in "EK" the dock and trailer conveying slats 18 have complementary apparatus for coupling them together. The apparatus for reciprocating the conveying slats 18 is incorporated into the dock D. The slats 18 in the trailer T are "passive" and once they are coupled to the slats 18 on the dock D, the single dock-mounted mechanism is used for reciprocating both sets of slats 18. As can be seen by Figs. 2-7, there is a need for a rather precise alignment of the rear end of the trailer T with the dock so that the slats 16, 18 are aligned and can be coupled together by the coupling mechanism provided for that purpose.

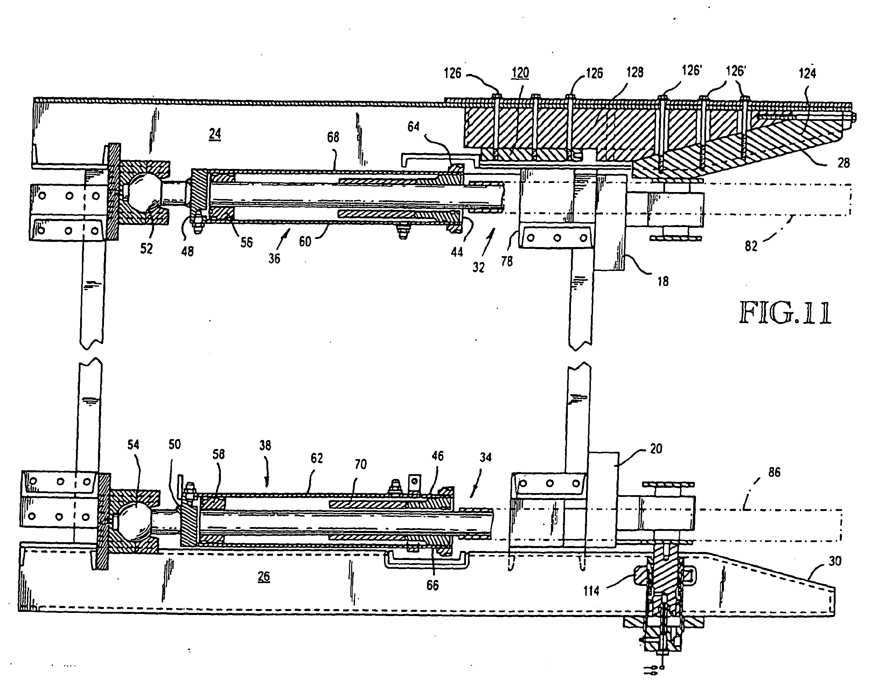

Proper alignment of the trailer T with the dock D requires both vertical and horizontal movement of the rear end of the trailer T. The apparatus for providing horizontal alignment includes a pair of longitudinal beams 24, 26 carried by the dock D. These beams 24, 26 project rearwardly from the aforementioned bumpers 20, 22. Referring to Fig. 11, they include converging sides 28, 30. An attempt will be made to backup the trailer T as straight as possible. However, it is anticipated that one side of the trailer T will contact one of the sloping surfaces 28, 30 and be cammed by it into a horizontally aligned position as the trailer T continues to backup towards the dock D. The horizontal alignment apparatus will be hereinafter described in greater detail.

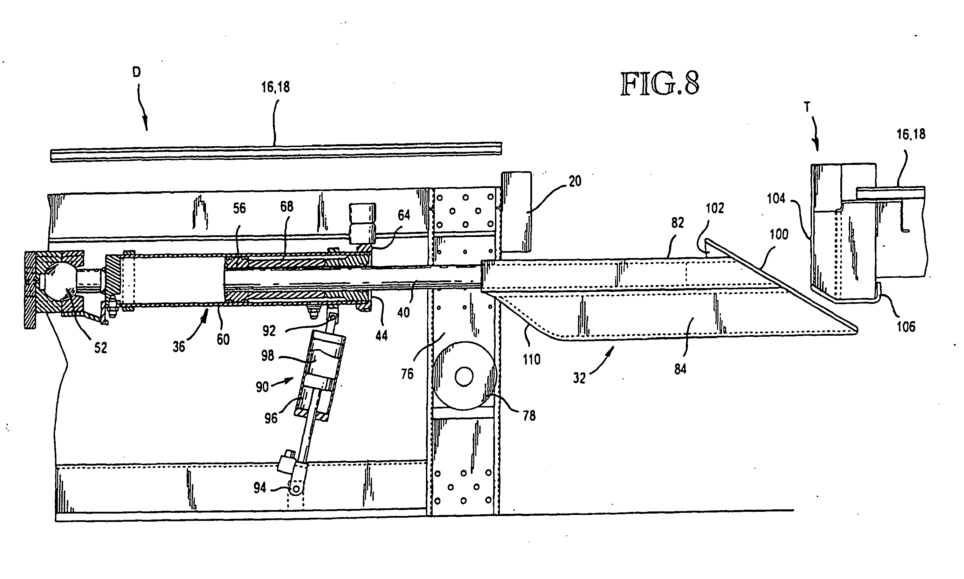

The vertical alignment apparatus includes a second pair of longitudinal beams 32, 34 positioned laterally inside of the beams 24, 26. Beams 32, 34 are extendable and retractable. They may be constructed from telescopic members that are extended and retracted by the use of hydraulic cylinders. Or, they may themselves be hydraulic cylinders that are constructed to withstand bending. Figs. 8 - 11 show that beams 32, 34 each have a cylinder end portion 36, 38 and a piston rod end portion 40, 42. The cylinder portions 36, 38 have open ends 44, 46 and closed ends 48, 50, shown to be anchored to a portion of the dock by ball and socket connections 52, 54. The piston rods 40, 42 include piston heads 56, 58 at their inner ends. At their outer ends, the cylinder barrels 56, 58 include axially elongated bushings 64, 66. Spacer tubes 68, 70 extend inside of the cylinders 60, 62 from the bushings 64, 66. When the piston rods 40, 42 are fully extended (Fig. 8), the piston heads 56, 58 are in contact with the spacer tubes 68, 70. This arrangement spaces the contact made by the piston heads 56, 58 with the cylinder barrels 60, 62 a sufficient distance away from the contact made by the piston rods 40, 42 with the bushings 64, 66 so that there is adequate bracing of the central portion of the hydraulic cylinders 36, 38 that they will not buckle.

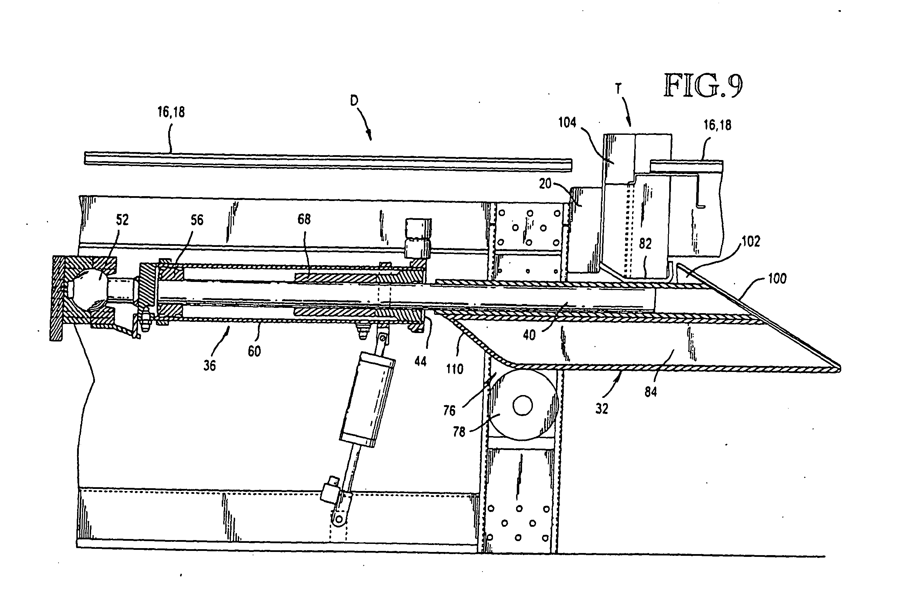

The ball and socket joint 52 is anchored to a fixed frame portion of the dock D. The beam 32 projects rearwardly from the connection 52, below the conveyor 16, 18 and out through a rear end opening 76 in the rear end of the dock D. The bumpers 20, 22 are above the opening 76. A pair of bushings or other supports 78, 80 are in the opening 76 below the beams 32, 34. Support 78 is below beam 32. Support 80 is below beam 34. The outer end of beam 32 is reinforced, such as by the use of upper and lower tubular members 82, 84. Beam 34 is reinforced in the same manner. An upper tubular member 86 is welded to a lower tubular member 88. The piston rods 40 extend into the upper tubular members 82, 86 and are welded or otherwise connected to the members 84, 88. As shown by Figs. 8 and 9, lifting/lowering cylinders 90 extend between a connection 92 with cylinder barrel 60 and a lower anchor point 96 that is apart of the frame for the dock D. A circular collar may surround the cylinder barrel 30 and the upper end of the cylinder 90 may be connected to this collar at 92. Both the upper and lower connections are pivot connections so that the cylinder 90 can swing in position as it is extended retracted. Preferably, the cylinder 90 is an air cylinder. Air is introduced into working chamber 96 for retracting the cylinder and pulling the beam 32 downwardly. Air is introduced into working chamber 98 for extending the cylinder 90 and lifting the beam 32, 34.

As shown by Figs. 8 - 10, sloping surfaces 100 are provided on the outer ends of the beams 32, 34. The upper ends of the surfaces 100 form hooks 102 between members 100 and the members 86. As shown by Figs. 8 - 10, the rear of the trailer T includes a horizontal beam 104 with a forwardly directed shoulder 106 at its lower edge. Fig. 8 shows the trailer T moving rearwardly towards the sloping surfaces 100 on the beams 32, 34. Fig. 8 shows the cylinder 90 for beam 32 holding the beam in a substantially horizontal position. The cylinder 90 for beam 34 does the same thing. As the trailer T is backing up, the lower rear edge of the beam 104 contacts the sloping surfaces 100 on the beams 32, 34. The beam 102 wants to move the beams 32, 34 downwardly and the sloping surfaces 100 want to move the beam 106 upwardly. Because there is air in the working chambers 98 of the cylinders 90, the air will compress and the beams 32, 34 will swing downwardly about the ball joints 52, 54. Eventually, the beam 104 will move behind the hooks 102. When this happens, the compressed air in the working chambers 98 will move the beams 32, 34 upwardly until the lower edge of the beam 104 is on top of the members 82, 86 and the shoulder 106 is inwardly of the hooks 102. Then, the beams 32, 34 are retracted. This moves the sloping surfaces 110 at the inner ends of the beam members 84, 88 against the supports 78, which are preferably in the form of rollers made from an elastomeric material. This contact between sloping surfaces 110 and the supports 78 while the beams 32, 34 are being retracted moves the beams 32, 34 upwardly on the supports 78 as shown by Fig. 9. Then the beams 32, 34 are retracted until the rear surface of the beam 104 contacts the bumpers 20, 22. Both beams 32, 34 are retracted until the trailer beam 104 is in contact with both bumpers 20, 22. As will it be appreciated, if, for example, the driver's side of beam 104 contacts bumper 20 before the passenger's side of bumper 104 contacts the bumper 22, retraction of beam 32 will stop and retraction of beam 34 will continue until the passenger's side of beam 104 is against its bumper 22. This maneuver at least partially aligns the trailer T with the dock D in the horizontal direction. If beam 32 is against location 112 of beam 24, horizontal alignment is complete. However, if the driver's end of beam 104 is spaced from beam 24 at location 112, a short hydraulic cylinder 114 carried by beam 26 is extended against the passenger side end of beam 104. This moves the beam 104 endwise, and the rear end of the trailer T sideways, until contact is made between the driver's side end of beam 104 and the location 112 on beam 24. At this time, horizontal alignment is complete.

Vertical alignment of the trailer T is complete when the beam sections 84, 88 are up on the supports 78. This is shown by Fig. 9. The hydraulic cylinders 36, 38 continue to pull on the beam sections 82, 84 and 86, 88, causing the hooks 102 to hold the rear beam 104 on trailer T tight against the bumpers 20, 22. As can be seen, the alignment apparatus of this invention very quickly aligns the trailer T with the dock D, placing the trailer slats 16, 18 in a proper position to be connected to the dock slats 16, 18. The trailer box is on a suspension system which allows some movement of the box both vertically and horizontally relative to the truck undercarriage. This ability of the trailer box to move allows the horizontal and vertical movement of the trailer box that has been described above.

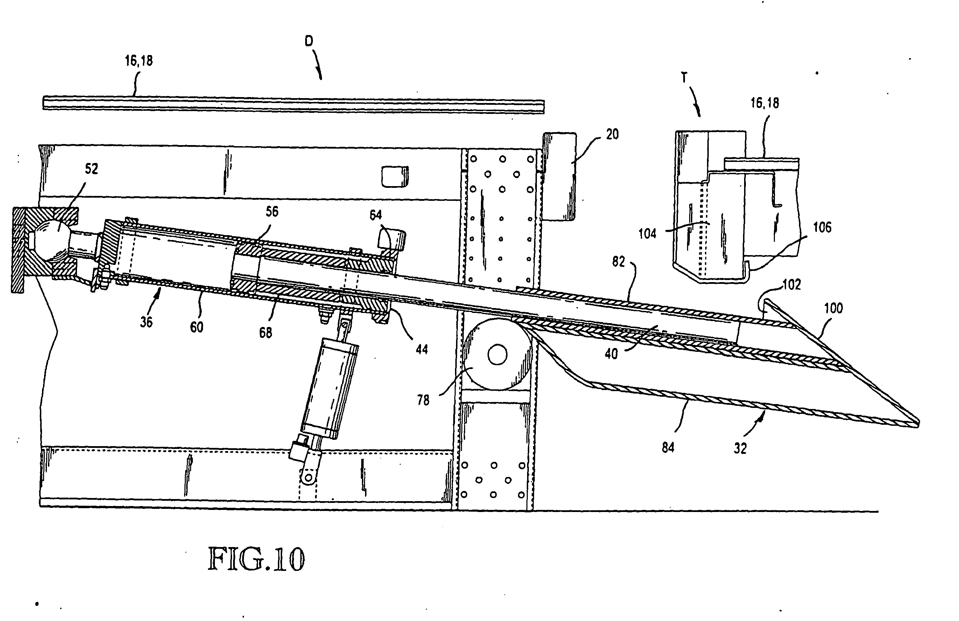

The trailer T can be easily and quickly disconnected from the dock D, and then moved away from the dock D. As shown by Fig. 10, extension of the beams 32, 34 will cause them to move downwardly off of the supports 78 into a sloping position in which the hooks 102 are below the shoulder 108. When the hooks 102 are in this position, the trailer T can be moved away from the dock D.

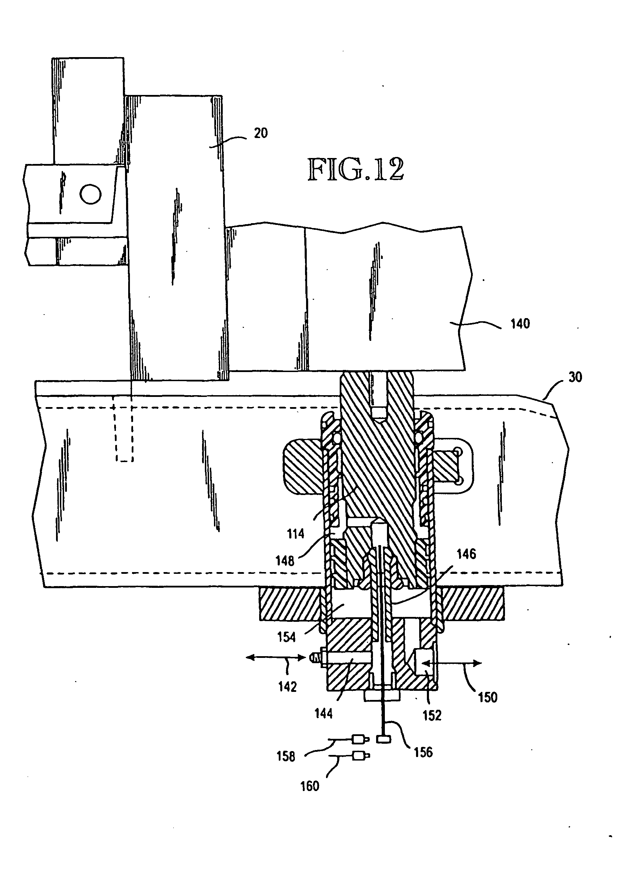

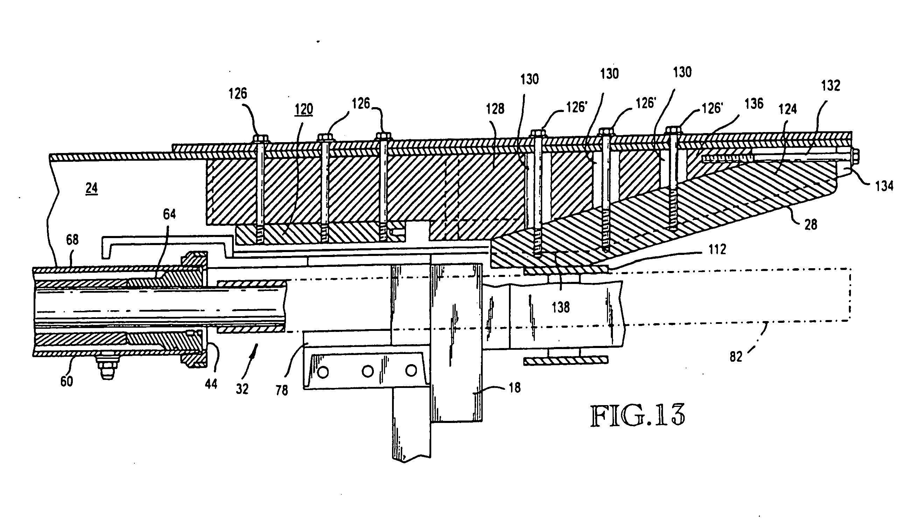

Figs. 11 and 13 show a plate 120 bolted to the rear end portion of beam 24 by use of bolts 126. A diagonal plate 28 is connected to beam 24 by bolts 126'. The bolts 126' extend through slots 130 in the member 128 and screw into diagonal member 28. A longitudinal bolt 132 extends through an opening in member 134 and screws into member 136. With the bolts 126 loose, the bolt 132 is tightened. This adjusts the position of member 28 relative to member 128. The slots 130 allow sufficient movement of the bolts 130 relative to member 128. Fig. 13 shows region 138 of member 28 in contact with the surface 112 that is on the rear corner of the trailer box. Referring to Fig. 12, the outer end of piston 114 makes contact with member 140 that is on the opposite rear side corner of the trailer box. A first fluid path 142 extends through port 144 and through a central passageway in member 146 into working chamber 148. A second fluid inlet/outlet path 150 extends through port 152 into working chamber 154. The introduction of working fluid under pressure through path 150 and the removal of fluid from working chamber 148 through path 146, 144, 142, causes an extension of the piston 114 against the corner 140 of the trailer box, shifting the rear end of the trailer box sideways towards member 138. Introduction of pressure fluid through inlet/outlet port 142 will allow it to move through passageway 146 into working chamber 148. A removal of fluid from working chamber 154 via passageway 152 and passageway 150 will cause a retraction of the piston 114 away from the trailer box corner 140. A member 156 may be connected to the piston 148 and position sensors 158, 160 may be used to determine the position of member 156 and the piston 148. The elements 156, 158, 160 are part of a gauge that signals the operating system and informs it of the position of the trailer box corner 140 relative to the slats 16, 18. When the conveying slats 16 are aligned and the lifting/holding slats 14 are aligned, this condition is detected by instrumentation that includes the gauges 156, 158, 160. The same bolts 126 (or new bolts) are used to secure the new wall plates 120, 124 to the body portion 128 of the beam 24.

The illustrated embodiment is only a single example of the present invention and, therefore, is non-limitive. It is to be understood that many changes in the particular structure, materials and features of the invention may be made without departing from the spirit and scope of the invention. Therefore, it is our intention that our patent rights not be limited by the particular embodiment that is illustrated and described herein, but rather is to be determined by the following claims, interpreted according to accepted doctrines of patent claim interpretation, including use of the doctrine of equivalents.

## Claims

1. A loading/unloading dock (D), comprising:
a dock end;
a vehicle supporting surface leading into the dock end;
a dock floor elevated above the vehicle supporting surface and extending endwise from the dock end away from the vehicle supporting surface;
a pair of laterally spaced apart longitudinal beams (32, 34), each including an inboard end portion below the dock floor and an outboard end portion (82, 84), (86, 88) projecting endwise outwardly from the dock end over the vehicle supporting surface;
each said longitudinal beam having an inner end and an outer end;
a pivotal connection (52) connecting the inner end of each longitudinal beam to a first support below the dock floor;
a vehicle engaging end portion at the outer end of each longitudinal beam;
first and second linear fluid motors (36, 38); (90) associated with each longitudinal beam,
said first linear motor being incorporated into the longitudinal beam and having a piston component (40, 42) and a cylinder component (56, 58), one of said components being a part of the inboard end portion of the longitudinal beam and the other being a part of the outboard end portion of the longitudinal beam;
each said second linear fluid motor having an upper end (92) connected to the inboard end portion of its longitudinal beam and a lower end (94) connected to a support below the inboard end portion of its longitudinal beam;
each first linear fluid motor (36, 38) being adapted to extend and retract for moving the vehicle engaging end portion of its longitudinal beam away from and towards the dock end; and
each said second linear fluid motor (90) being adapted to extend and retract for the purpose of swinging its longitudinal beam (32, 34) up and down about the pivotal connection (52) at the inner end of the longitudinal beam;
**characterized in that** the dock further comprises:
for each said longitudinal beam (32, 34) a second support (78) at the rear end of the dock (D), said second support being arranged for supporting the outboard end portions of said longitudinal beams when the longitudinal beams are retracted.

2. A loading/unloading dock according to claim 1, wherein the vehicle engaging portion has an outwardly and downwardly sloping upper surface (100) adapted to make contact with a lower rear portion (106) of the vehicle.

3. The loading/unloading dock of claim 2, wherein the sloping surface (100) has an inner end and an outer end and a hook (102) adjacent the inner end, said hook being adapted to hook onto a rear portion of a vehicle that is backed up to the loading/unloading dock and pull it towards the dock end when the first linear motor is retracted.

4. The loading/unloading dock of claim 1, wherein the second linear fluid motors (90) each include an expansible chamber (98) into which fluid can be delivered for exerting an upward force on the longitudinal beam (32, 34) for swinging it upwardly about the pivotal connections (52).

5. The loading/unloading dock of claim 4, wherein the fluid in said fluid chambers (98) is compressible so that a downward force imposed by the vehicle on the outboard end portions of the longitudinal beams will compress the fluid in said chambers and allow the longitudinal beam to swing downwardly in response to said force.

6. The loading/unloading dock of claim 1, comprising a pair of laterally spaced apart side members (24, 26) connected to the dock and having rear end portions which project rearwardly from the dock end and have confronting inner side surfaces (28, 30) which diverge as they extend outwardly towards the dock end, said side surfaces being adapted to cam a rear portion of a vehicle that is backed into the dock into a particular position relative to the dock.

7. The loading/unloading dock of claim 6, comprising a hydraulic motor (114) adjacent one of the sloping side surfaces, and adapted to be extended against a rear portion of a vehicle being backed into the dock end, for exerting a sideways directed force on the rear end portion of the vehicle and pushing it sideways towards the other side surface.

8. The loading/unloading dock of claim 1, wherein the first linear hydraulic motors (36, 38) are hydraulic motors.

9. The loading/unloading dock of claim 8, wherein the second linear fluid motors (90) are air motors.

10. The loading/unloading dock of claim 1, wherein the second linear fluid motors are air motors.

11. The loading/unloading dock of claim 1, wherein the cylinder component (60, 62) of the first linear fluid motor is connected by the pivotal connection (52) to the first support below the dock floor, and the piston component (40, 42) extends axially rearwardly from the cylinder component and rearwardly outwardly from the dock end.

12. The loading/unloading dock from claim 1, wherein the second supports are in the form of rollers made from an elastomeric material.

13. The loading/unloading dock from claim 1, wherein the second supports are bushings.

## Patentansprüche

1. Belade-/Entladedock (D) umfassend:
ein Dockende;
eine Fahrzeughaltefläche, die in das Dockende hineinführt;
einen Dockboden, erhöht über der Fahrzeughaltefläche und der sich der Länge nach von dem Dockende weg von der Fahrzeughaltefläche erstreckt;
ein Paar seitlich voneinander beabstandeter Längsträger (32, 34), von denen jeder einen inneren Endbereich unter dem Dockboden und einen äußeren Endbereich (82, 84), (86, 88) umfasst, die sich der Länge nach von dem Dockende über die Fahrzeughaltefläche nach außen erstrecken;
wobei jeder Längsträger ein inneres Ende und ein äußeres Ende umfasst;
eine Schwenkverbindung (52), die das innere Ende eines jeden Längsträgers mit einer ersten Haltevorrichtung unter dem Dockboden verbindet;
ein ein Fahrzeug greifender Endbereich an dem äußeren Ende jedes Längsträgers;
erste und zweite lineare Fluid-Antriebe (36, 38); (90), die mit jedem Längsträger verbunden sind,
wobei der erste lineare Antrieb in den Längsträger integriert ist und einen Kolbenelement (40, 42) und ein Zylinderelement (56, 58) umfasst, wobei eines der Elemente ein Teil des inneren Endbereichs des Längsträgers ist und das andere ein Teil des äußeren Endbereichs des Längsträgers ist;
wobei jeder zweite lineare Fluidantrieb ein oberes Ende (92) umfasst, das mit dem inneren Endbereich seines Längsträgers verbunden ist und ein unteres Ende (94), das mit einer Haltevorrichtung unter dem inneren Endbereich seines Längsträgers verbunden ist;
wobei jeder erste lineare Fluidantrieb (36, 38) ausgelegt ist, um sich zu erstrecken und zurückzuziehen, um den das Fahrzeug greifenden Endbereich seines Längsträgers weg von und zu dem Dockende hin zu bewegen; und
wobei jeder zweite lineare Fluidantrieb (90) ausgelegt ist sich zu erstrecken und zurückzuziehen, um seinen Längsträger (32, 34) um die Schwenkverbindung (52) an dem inneren Ende des Längsträgers auf und ab zu schwenken;
**dadurch gekennzeichnet, dass** das Dock weiter umfasst:
eine zweite Haltevorrichtung (78) für jeden Längsträger (32, 34) an dem hinteren Ende des Docks (D), wobei die zweite Haltevorrichtung angeordnet ist, um die äußeren Endbereiche der Längsträger zu halten, wenn die Längsträger zurückgezogen sind.

2. Belade-/Entladedock nach Anspruch 1, bei dem der ein Fahrzeug greifende Bereich eine nach außen und nach unten geneigte obere Fläche (100) umfasst, die ausgelegt ist, um mit einem unteren hinteren Bereich (106) des Fahrzeugs in Kontakt zu treten.

3. Belade-/Entladedock nach Anspruch 2, bei dem die geneigte Fläche (100) ein inneres Ende und ein äußeres Ende und einen Haken (102) umfasst, der an das innere Ende angrenzt, wobei der Haken ausgelegt ist, um an dem hinteren Bereich eines Fahrzeuges, das an das Belade-/Entladedock rückwärts herangefahren ist, anzugreifen und es zum Dockende zu ziehen, wenn der erste lineare Antrieb eingefahren ist.

4. Belade-/Entladedock nach Anspruch 1, bei dem jeder zweite lineare Fluidantrieb (90) eine ausdehnbare Kammer (98) umfasst, in welche Fluid geliefert werden kann, um eine nach oben gerichtete Kraft auf den Längsträger (32, 34) auszuüben, um ihn nach oben um die Schwenkverbindungen (52) zu schwenken.

5. Belade-/Entladedock nach Anspruch 4, bei dem das Fluid in den Fluidkammern (98) komprimierbar ist, so dass eine nach unten gerichtete Kraft, die von dem Fahrzeug auf die äußeren Endbereiche der Längsträger ausgeübt wird, das Fluid in den Kammern komprimieren wird und es dem Längsträger ermöglichen wird, aufgrund dieser Kraft nach unten zu schwenken.

6. Belade-/Entladedock nach Anspruch 1, das ein Paar seitlich voneinander beabstandeter Seitenelemente (24, 26) umfasst, die mit dem Dock verbunden sind und hintere Endbereiche umfassen, die sich von dem Dockende nach hinten erstrecken und die einander gegenüberliegende innere Seitenflächen (28, 30) umfassen, die auseinandergehen, wenn sie sich nach außen zu dem Dockende hin erstrecken, wobei die seitlichen Flächen ausgelegt sind, um einen hinteren Bereich eines Fahrzeugs, das in das Dock hinein gefahren ist, in eine bestimmte Position relativ zu dem Dock zu bringen.

7. Belade-/Entladedock nach Anspruch 6, das einen hydraulischen Antrieb (114) umfasst, der an eine der geneigten Seitenflächen angrenzt, und der ausgelegt ist, um gegen einen hinteren Bereich eines Fahrzeuges, das in dem Dockende aufgenommen ist, ausgestreckt zu werden, um eine zur Seite gerichtete Kraft auf den hinteren Endbereich des Fahrzeuges auszuüben und um es seitlich zu der anderen Seitenfläche hin zu drücken.

8. Belade-/Entladedock nach Anspruch 1, bei dem die ersten linearen hydraulischen Antriebe (36, 38) hydraulische Antriebe sind.

9. Belade-/Entladedock nach Anspruch 8, bei dem die zweiten linearen Fluidantriebe (90) Luftantriebe sind.

10. Belade-/Entladedock nach Anspruch 1, bei dem die zweiten linearen Fluidantriebe Luftantriebe sind.

11. Belade-/Entladedock nach Anspruch 1, bei dem das Zylinderelement (60, 62) des ersten linearen Fluidantriebs über die Schwenkverbindung (52) mit der ersten Haltevorrichtung unter dem Dockboden verbunden ist, und das Kolbenelement (40, 42) sich axial nach hinten von das Zylinderelement und nach hinten, nach außen von dem Dockende erstreckt.

12. Belade-/Entladedock nach Anspruch 1, bei dem die zweite Haltevorrichtungen die Form von Rollen aufweisen, die aus einem Elastomermaterial hergestellt sind.

13. Belade-/Entladedock nach Anspruch 1, bei dem die zweiten Haltevorrichtungen Buchsen sind.

## Revendications

1. Un quai de chargement/déchargement (D), comprenant :
une extrémité de quai ;
une surface de support de véhicule menant à l'extrémité de quai ;
un plancher de quai élevé au-dessus de la surface de support de véhicule et dont l'extrémité s'étend depuis l'extrémité de quai à l'opposé de la surface de support de véhicule ;
deux poutres longitudinales espacées latéralement (32, 34), comprenant chacune une partie d'extrémité interne située sous le plancher de quai et une partie d'extrémité externe (82, 84), (86, 88) dont l'extrémité fait saillie vers l'extérieur depuis l'extrémité de quai au-dessus de la surface de support de véhicule ;
chacune desdites poutres longitudinales ayant une extrémité interne et une extrémité externe ;
une liaison pivotante (52) reliant l'extrémité interne de chacune des poutres longitudinales à un premier support situé sous le plancher de quai ;
une partie d'extrémité d'engagement de véhicule située à l'extrémité externe de chacune des poutres longitudinales ;
des premiers et seconds moteurs à fluide linéaires (36, 38) ; (90) associés à chacune des poutres longitudinales,
ledit premier moteur linéaire étant incorporé dans la poutre longitudinale et ayant un composant de piston (40, 42) et un composant de cylindre (56, 58), l'un desdits composants formant une partie de la partie d'extrémité interne de la poutre longitudinale et l'autre formant une partie de la partie d'extrémité externe de la poutre longitudinale ;
chacun desdits seconds moteurs à fluide linéaires ayant une extrémité supérieure (92) reliée à la partie d'extrémité interne de sa poutre longitudinale et une extrémité inférieure (94) reliée à un support situé sous la partie d'extrémité interne de sa poutre longitudinale ;
chacun des premiers moteurs à fluide linéaires (36, 38) étant prévu pour s'étendre et se rétracter de façon à déplacer la partie d'extrémité d'engagement du véhicule de sa poutre longitudinale en direction de l'extrémité de quai et dans la direction opposée ; et
chacun desdits seconds moteurs à fluide linéaires (90) étant prévu pour s'étendre et se rétracter dans le but de faire basculer sa poutre longitudinale (32, 34) vers le haut et vers le bas autour de la liaison pivotante (52) à l'emplacement de l'extrémité interne de la poutre longitudinale ;
**caractérisé en ce que** le quai comprend en outre :
pour chacune desdites poutres longitudinales (32, 34), un second support (78) situé à l'extrémité arrière du quai (D), ledit second support étant agencé de façon à soutenir les parties d'extrémité externes desdites poutres longitudinales lorsque les poutres longitudinales sont rétractées.

2. Un quai de chargement/déchargement selon la revendication 1, la partie d'engagement de véhicule présentant une surface supérieure inclinée vers le bas et vers l'extérieur (100) prévue pour entrer en contact avec une partie arrière inférieure (106) du véhicule.

3. Le quai de chargement/déchargement de la revendication 2, la surface inclinée (100) ayant une extrémité interne et une extrémité externe et un crochet (102) adjacent à l'extrémité interne, ledit crochet étant prévu pour s'accrocher sur une partie arrière d'un véhicule adossé au quai de chargement/déchargement et pour le tirer en direction de l'extrémité du quai lorsque le premier moteur linéaire est rétracté.

4. Le quai de chargement/déchargement de la revendication 1, les seconds moteurs à fluide linéaires (90) comprenant chacun une chambre dilatable (98) dans laquelle du fluide peut être délivré afin d'exercer une force dirigée vers le haut sur la poutre longitudinale (32, 34) pour la faire basculer vers le haut autour des liaisons pivotantes (52).

5. Le quai de chargement/déchargement de la revendication 4, le fluide présent dans lesdites chambres de fluide (98) étant compressible, de telle sorte qu'une force dirigée vers le bas exercée par le véhicule sur les parties d'extrémité externes des poutres longitudinales compresse le fluide dans lesdites chambres et permette à la poutre longitudinale de basculer vers le bas en réaction à ladite force.

6. Le quai de chargement/déchargement de la revendication 1, comprenant deux éléments latéraux espacés latéralement (24, 26) reliés au quai et ayant des parties d'extrémité arrière faisant saillie vers l'arrière depuis l'extrémité du quai et ayant des surfaces latérales internes se faisant face (28, 30) qui divergent en s'étendant vers l'extérieur en direction de l'extrémité du quai, lesdites surfaces latérales étant prévues pour placer une partie arrière d'un véhicule adossé au quai dans une position spécifique par rapport au quai.

7. Le quai de chargement/déchargement de la revendication 6, comprenant un moteur hydraulique (114) adjacent à l'une des surfaces latérales inclinées, et prévu pour s'étendre contre une partie arrière d'un véhicule adossé contre l'extrémité du quai, de façon à exercer une force dirigée latéralement sur la partie arrière du véhicule et à le pousser latéralement en direction de la surface opposée.

8. Le quai de chargement/déchargement de la revendication 1, les premiers moteurs hydrauliques linéaires (36, 38) étant des moteurs hydrauliques.

9. Le quai de chargement/déchargement de la revendication 8, les seconds moteurs à fluide linéaires (90) étant des moteurs pneumatiques.

10. Le quai de chargement/déchargement de la revendication 1, les seconds moteurs à fluide linéaires étant des moteurs pneumatiques.

11. Le quai de chargement/déchargement de la revendication 1, le composant de cylindre (60, 62) du premier moteur à fluide linéaire étant relié par l'intermédiaire de la liaison pivotante (52) au premier support situé sous le plancher du quai, et le composant de piston (40, 42) s'étendant vers l'arrière axialement depuis le composant de cylindre et vers l'arrière et l'extérieur depuis l'extrémité du quai.

12. Le quai de chargement/déchargement de la revendication 1, les seconds supports étant de la forme de galets constitués d'un matériau élastomère.

13. Le quai de chargement/déchargement de la revendication 1, les seconds supports étant des manchons.
